# EUROPEAN PATENT SPECIFICATION

(11) **EP 2 251 956 B1**
(45) Date of publication and mention of the grant of the patent: **01.05.2019**
(21) Application number: 10004686.1
(22) Date of filing: 04.05.2010
(51) Int. Cl.: H02K 1/18, H02K 5/16, H02K 11/00

(54) **Motor**
Motor
Moteur

(30) Priority: 04.05.2009 US 175093 P
(43) Date of publication of application: 17.11.2010
(73) Proprietor: Magna Powertrain Bad Homburg GmbH, 61352 Bad Homburg v. d. Höhe (DE)
(72) Inventor: Maier, Erich, 97078 Würzburg (DE); Ras, Mauro, 10060 Bibiana (TO) (IT); Horski, Marek, London, Ontario N6C 2E9 (CA)
(74) Representative: Rausch, Gabriele

(56) References cited:
- EP-A1- 0 017 075
- US-A1- 2009 096 304
- US-B1- 6 360 703

## Description

The present invention relates to electric motors and more particularly to the support structure that joins the components of a motor together.

Electric motors have been in use for many years and come in a wide variety of configurations. In general an electric motor includes a rotor, a stator, electronics that control the operation of the motor, and support structure that is used to assembly of the components together. In some instances, particularly where cost is a concern, it is desirable to reduce the assembly time required for the motor and the complexity of the motor.

EP0017075A1 discloses an outer rotor motor with an axial collar which embraces a shaft end or inner tube inserted into the bore in the stator plates fixed by friction, and with a circuit board arranged between a stator and the opposite bearing plate wherein the circuit board is pre-mounted on the bearing plate. The inner tube of the bearing plate is adapted to host a rotor shaft. US20090096304 A1 discloses a fan motor including a frame and a motor. The frame includes a supporting plate and a central tube. A pair of arms extends upwardly from the supporting plate and spaces from each other to form a gap therebetween. Each arm has a barb at a top end thereof. The motor includes a circuit board and a stator. The stator defines an axial hole for receiving the central tube therein.

US6360703B1 discloses an engine cooling module includes a shroud structure, and a brushless dc electric motor having an armature assembly and a rotor carrying permanent magnets. Mounting structure is provided having first and second opposing surfaces. The armature assembly is fixedly coupled with respect to the first surface. The mounting structure is fixed to the shroud structure. A fan has a plurality of blades and a hub. The rotor is fixed with respect to the hub. A shaft is associated with the rotor and the armature assembly permitting rotation of the rotor with respect to the armature assembly. An electronic control unit is coupled to the second surface of the mounting structure.

It is the object of the invention to improve mounting assembly time and method by using a simplified structure of the motor.

This object is achieved by a motor according to the invention as defined in the independent claim 1. Further embodiments of the invention are defined in the dependent claims 2 - 5. The motor is compact and simple to assemble.

The present invention will now be described, by way of example only, with reference to the attached drawings, in which:
Figure 1 is a perspective exploded view of a motor in accordance with an embodiment of the present invention; and
Figure 2 is another perspective exploded view of the motor shown in Figure 1.

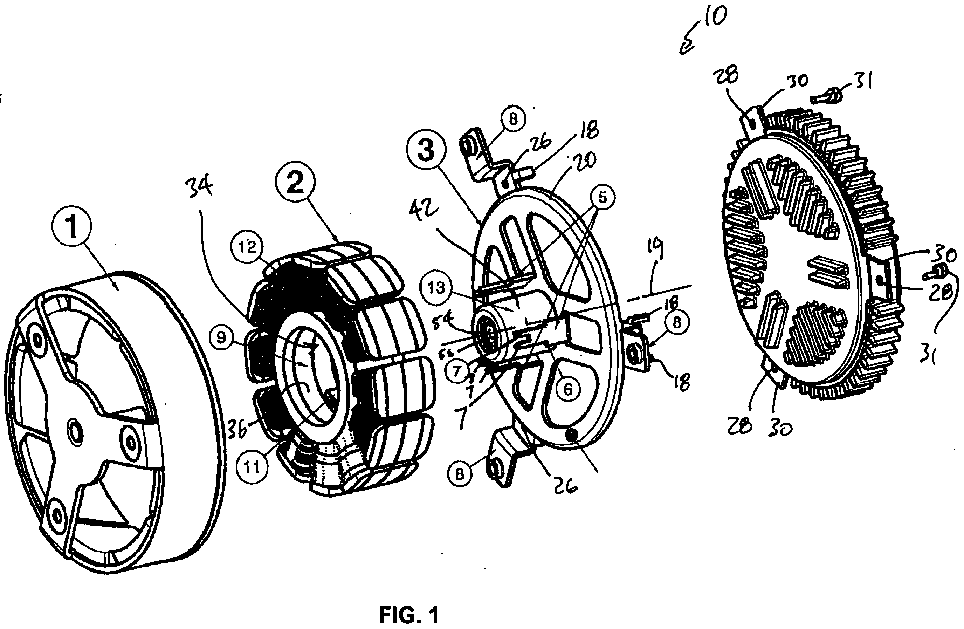

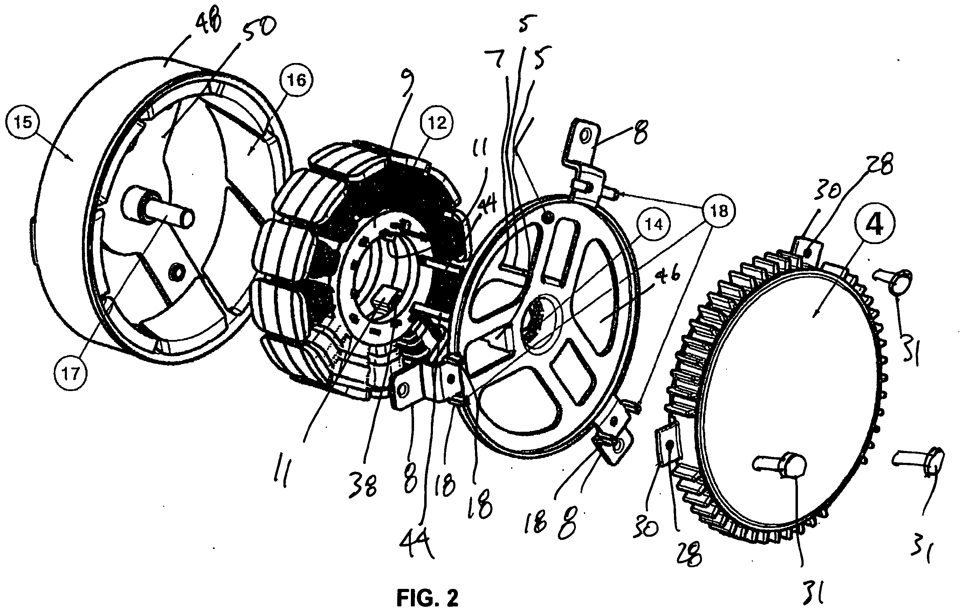

Reference is made to Figures 1 and 2, which show a motor 10 in accordance with an embodiment of the present invention. The motor 10 shown is a brushless DC motor.

The motor 10 may be used for any suitable purpose. For example the motor 10 may be used as part of an engine cooling module for a vehicle engine (not shown). The motor 10 includes a component support member 3, a stator 2, a rotor 1 and an electronics unit 4. The component support member 3 supports all the other components of the motor 10, while contributing relatively little to the overall size of the motor 10.

The component support member 3 may be made from any suitable material such as a metal, such as a form of aluminum The component support member 3 has a longitudinal axis 19, and includes a main body 20, which may be generally disc-shaped, and a tubular bearing support member 13 which extends axially from the main body 20. On the main body 20 are a plurality of arms 8, which may be arms that extend radially outwardly from the main body 20. The arms 8 have motor mounting apertures 24 therethrough for mounting to any suitable motor support member, such as a shroud structure (not shown) in a vehicle (not shown). On each of the arms 8 is a first electronics unit fastener aperture 26. The first electronics unit fastener apertures 26 align with second electronics unit fastener apertures 28 provided on arms 30 on the electronics unit 4. Guides shown at 18 may be provided to circumferentially capture the arms 30 on the electronics unit 4 so as to assist in keeping the electronics unit 4 in place during mounting of the electronics unit 4 to the component support member 3. Fasteners shown at 31 pass through the first and second fastener apertures 26 and 28 to mount the electronics unit 4 to the component support member 3.

The stator 2 includes a core 9, which may be a solid member or which may be made up of a plurality of laminations as is known in the art of electric motors. The stator 2 further includes a winding set 12, which is wound around the core 9. The stator 2 has a central pass-through aperture 34, which may be defined by a radially inner wall shown at 36 of the core 9.

On the radially inner wall 36 are a plurality of ribs 11, which mate with axially extending tabs 5 on the component support member 3. More specifically, the ribs 11 have tab-receiving apertures 38 therein which are sized to receive the tabs 5 on the component support member 3, thereby fixing the stator 2 circumferentially to the component support member 3. Furthermore, the tabs 5 on the component support member 3 each have first and second legs 7 extending axially therefrom. The legs 7 are received in leg-receiving apertures (not shown) which extend from within the tab-receiving apertures 38 in the ribs 11. The leg-receiving apertures direct the legs 7 in opposite directions from each other when the stator 2 and the component support member 3 are mated together. As a result, the legs 7 cooperate with the leg-receiving apertures to hold the stator 2 in place on the component support member 3. The leg-receiving apertures direct the legs 7 in opposite directions circumferentially. This arrangement may be similar to the arrangement related to tabs 20 which connect to the armature assembly 26 in US Patent No. 6,360,703 (Rahbar et al).

To set the axial position of the stator 2 relative to the component support member 3, the tabs 5 may include shoulders 6 which abut surfaces on the ribs 11. Alternatively other means for setting the axial position of the stator 2 may be provided.

The radially inner wall 36 of the stator 2 is supported on the radially outer surface shown at 42 of the tubular bearing support member 13. It will be noted that the mounting of the stator 2 to the component support member 3 in this way is accomplished without tools (ie. toollessly).

The stator 2, which is mounted on a first side of the component support member 3, may connect electrically to the electronics unit 4, which is mounted to a second side of the component support member 3, by electrical conduits 44 with any suitable routing. For example, the electrical conduits 44 may pass through a conduit pass-through aperture 46 in the component support member 3.

The rotor 1 comprises a support frame 15 and a set of permanent magnets 16. The support frame 15 is made up of a ring 48, a spider 50 and a support shaft 17. The permanent magnets 16 mount to a radially inner surface of the ring 48. The support shaft 17 extends axially inwardly through the central pass-through aperture 34 in the stator 2, and into the tubular bearing support member 13. The radially inner wall of the tubular bearing support member 13 is shown at 54 and defines an interior 56. A plurality of bearings shown at 14 are supported on the radially inner surface of the tubular bearing support member 13. The bearings 14 rotatably support the support shaft 17 of the rotor 1. When mounted, the rotor 1 is positioned radially outwardly from the stator 2. Thus the motor 10 shown is a radial flux motor. It is alternatively possible for the motor 10 to be an axial flux motor, which would have a rotor positioned beside the stator, such that the components from one side of the motor to the other would be: the rotor, the stator, the component support member, and the electronics unit.

Thus, all the components of the motor 10 are supported on the component support member 3, and require relatively little use of tools and threaded fasteners for the assembly of the motor 10.

The motor 10 may be used for any suitable purpose. For example, the motor 10 may be part of an engine cooling module that is operatively associated with a radiator of a vehicle for cooling the engine of the vehicle.

While the above description constitutes a plurality of embodiments of the present invention, it will be appreciated that the present invention is susceptible to further modification within the scope of the accompanying claims.

## Claims

1. A motor (10), comprising:
a stator (2) having a central pass-through aperture (34);
a rotor (1) having a central support shaft (17) that passes through the central pass-through aperture (34) of the stator (2);
an electronics unit (4) electrically connected to the stator (2) and configured for controlling the operation of the motor; and
a component support member (3), wherein the component support member (3) includes a plurality of mounting members configured to connect to a motor support member, wherein the stator (2) is fixedly mounted to the component support member (3), and wherein the electronics unit (4) is fixedly mounted to the component support member (3), wherein the component support member(3) has a longitudinal axis (19) and has a plurality of axially extending tabs (5) spaced from each other and from the longitudinal axis (19), and wherein the stator (2) includes a plurality of axially extending tab-receiving apertures (38) which receive the axially extending tabs (5) so as to lock the stator (2) circumferentially relative to the component support member (3), wherein each axially extending tab (5) has first and second legs (7) extending therefrom,
**characterized in that**
each tab-receiving aperture (38) has first and second leg-receiving apertures which are routed to direct the first and second legs (7) circumferentially away from each other,
wherein the component support member (3) further includes a tubular bearing support member (13), having a radially inner wall (54) and a plurality of bearings (14) supported on the radially inner wall (54), wherein the central support shaft (17) of the rotor (1) is rotatably supported on the plurality of bearings (14).

2. A motor as claimed in claim 1, wherein the motor is a radial flux motor.

3. A motor as claimed in claim 1, wherein the tubular bearing support member (13) has an exterior wall which engages the central pass-through aperture (34) of the stator (2) and which supports the stator (2).

4. A motor as claimed in claim 1, wherein each mounting member on the component support member (3) has a first electronics unit fastener aperture (26), wherein the electronics unit (4) has a plurality of second electronics unit mounting members (28) which are aligned with the first electronics unit mounting apertures (26), and wherein an electronics units fastener (31) passes through the first and second aligned electronics unit mounting apertures to join the electronics unit (4) to the component support member (3).

5. A vehicle comprising a motor as claimed in claim 1, wherein the motor support member (3) is positioned to bring the motor into engagement with components of an engine cooling module in the vehicle.

## Patentansprüche

1. Motor (10), der Folgendes umfasst:
einen Stator (2) mit einer zentralen Durchgangsöffnung (34);
einen Rotor (1) mit einer zentralen Stützwelle (17), die durch die zentrale Durchgangsöffnung (34) des Stators (2) verläuft;
eine Elektronikeinheit (4), die elektrisch mit dem Stator (2) verbunden und für ein Steuern des Betriebs des Motors ausgelegt ist; und
ein Komponentenstützelement (3), wobei das Komponentenstützelement (3) eine Vielzahl von Montageelementen beinhaltet, die dazu ausgelegt sind, mit einem Motorstützelement verbunden zu werden, wobei der Stator (2) fest an dem Komponentenstützelement (3) montiert ist, und wobei die Elektronikeinheit (4) fest an dem Komponentenstützelement (3) montiert ist, wobei das Komponentenstützelement (3) eine Längsachse (19) aufweist und eine Vielzahl von sich axial erstreckenden Vorsprüngen (5) aufweist, die voneinander und von der Längsachse (19) beabstandet sind, und wobei der Stator (2) eine Vielzahl von sich axial erstreckenden Vorsprungaufnahmeöffnungen (38) beinhaltet, welche die sich axial erstreckenden Vorsprünge (5) aufnehmen, um den Stator (2) entlang des Umfangs relativ zu dem Komponentenstützelement (3) zu sperren, wobei jeder sich axial erstreckende Vorsprung (5) ein erstes und zweites Bein (7) aufweist, die sich von dort erstrecken,
**dadurch gekennzeichnet, dass** jede der Vorsprungaufnahmeöffnungen (38) erste und zweite Beinaufnahmeöffnungen aufweist, die so geführt sind, dass sie das erste und zweite Bein (7) umlaufend voneinander wegleiten,
wobei das Komponentenstützelement (3) ferner ein röhrenförmiges Lagerstützelement (13) mit einer radialen Innenwand (54) und einer Vielzahl von Lagern (14) beinhaltet, die auf der radialen Innenwand (54) gestützt sind, wobei die zentrale Stützwelle (17) des Rotors (1) drehbar auf der Vielzahl von Lagern (14) gestützt ist.

2. Motor nach Anspruch 1, wobei der Motor ein Radialflussmotor ist.

3. Motor nach Anspruch 1, wobei das röhrenförmige Lagerstützelement (13) eine Außenwand aufweist, die in die zentrale Durchgangsöffnung (34) des Stators (2) eingreift und die den Stator (2) stützt.

4. Motor nach Anspruch 1, wobei jedes Montageelement an dem Komponentenstützelement (3) eine erste Elektronikeinheit-Befestigungsöffnung (26) aufweist, wobei die Elektronikeinheit (4) eine Vielzahl von zweiten Elektronikeinheit-Montageelementen (28) aufweist, die auf die ersten Elektronikeinheit-Montageöffnungen (26) ausgerichtet sind, und wobei ein Elektronikeinheit-Befestigungsmittel (31) durch die erste und zweite ausgerichtete Elektronikeinheit-Montageöffnung verläuft, um die Elektronikeinheit (4) mit dem Komponentenstützelement (3) zu verbinden.

5. Fahrzeug, das einen Motor nach Anspruch 1 umfasst, wobei das Motorstützelement (3) so positioniert ist, dass es den Motor in einen Eingriff mit Komponenten eines Motorkühlmoduls in dem Fahrzeug bringt.

## Revendications

1. Moteur (10), comprenant :
un stator (2) ayant une ouverture traversante centrale (34) ;
un rotor (1) ayant un arbre de support central (17) qui passe à travers l'ouverture traversante centrale (34) du stator (2) ;
une unité électronique (4) connectée électriquement au stator (2) et conçue pour commander le fonctionnement du moteur ; et
un élément de support de composant (3), l'élément de support de composant (3) comprenant une pluralité d'éléments de montage conçus pour se connecter à un élément de support de moteur, le stator (2) étant monté à demeure sur l'élément de support de composant (3), et l'unité électronique (4) étant montée à demeure sur l'élément de support de composant (3), l'élément de support de composant (3) ayant un axe longitudinal (19) et ayant une pluralité de pattes s'étendant axialement (5) espacées les unes des autres et de l'axe longitudinal (19), et le stator (2) comprenant une pluralité d'ouvertures réceptrices de patte s'étendant axialement (38) qui reçoivent les pattes s'étendant axialement (5) de sorte à verrouiller le stator (2) circonférenciellement par rapport à l'élément de support de composant (3), chaque patte s'étendant axialement (5) ayant des premières et secondes branches (7) s'étendant à partir de celle-ci,
**caractérisé en ce que** chaque ouverture réceptrice de patte (38) a des première et seconde ouvertures réceptrices de patte qui sont orientées pour diriger les première et seconde branches (7) circonférentiellement à l'opposé l'une de l'autre,
l'élément de support de composant (3) comprenant en outre un élément de support de palier tubulaire (13), ayant une paroi radialement intérieure (54) et une pluralité de paliers (14) supportés sur la paroi radialement intérieure (54), l'arbre de support central (17) du rotor (1) étant supporté en rotation sur la pluralité de paliers (14).

2. Moteur selon la revendication 1, le moteur étant un moteur à flux radial.

3. Moteur selon la revendication 1, l'élément de support de palier tubulaire (13) ayant une paroi extérieure qui vient en prise avec l'ouverture traversante centrale (34) du stator (2) et qui supporte le stator (2).

4. Moteur selon la revendication 1, chaque élément de montage sur l'élément de support de composant (3) ayant une première ouverture (26) de fixation d'unité électronique, l'unité électronique (4) ayant une pluralité de seconds éléments de montage (28) d'unité électronique qui sont alignés avec les premières ouvertures de montage (26) d'unité électronique, et une fixation (31) d'unité électronique passant à travers les première et seconde ouvertures de montage d'unité électronique alignées pour relier l'unité électronique (4) à l'élément de support de composant (3).

5. Véhicule comprenant un moteur selon la revendication 1, l'élément de support de moteur (3) étant positionné pour amener le moteur en prise avec des composants d'un module de refroidissement de moteur dans le véhicule.
